# EUROPÄISCHE PATENTSCHRIFT

(11) **EP 1 115 551 B1**
(45) Veröffentlichungstag und Bekanntmachung des Hinweises auf die Patenterteilung: **16.10.2002**
(21) Anmeldenummer: 99969372.4
(22) Anmeldetag: 24.08.1999
(51) Int. Cl.: B29C 47/90, B29C 47/92

(54) **VORRICHTUNG UND VERFAHREN ZUR HERSTELLUNG VON KUNSTSTOFFROHREN**
DEVICE AND METHOD FOR PRODUCING PLASTIC PIPES
DISPOSITIF ET PROCEDE POUR LA PRODUCTION DE TUBES EN MATIERE PLASTIQUE

(30) Priorität: 22.09.1998 DE 19843339
(43) Veröffentlichungstag der Anmeldung: 18.07.2001
(73) Patentinhaber: Egeplast Werner Strumann GmbH & Co. KG, 48268 Greven (DE); Krauss-Maffei Kunststofftechnik GmbH, 80997 München (DE)
(72) Erfinder: ULRICH, Herbert, D-48282 Emsdetten (DE)
(74) Vertreter: Habbel, Hans-Georg, Dipl.-Ing.
(86) Internationale Anmeldenummer: DE9902709
(87) Internationale Veröffentlichungsnummer: WO00016963

(56) Entgegenhaltungen:
- EP-A- 0 425 944
- GB-A- 1 380 397
- GB-A- 2 182 603
- US-A- 4 355 966

## Beschreibung

Die Erfindung bezieht sich auf eine Vorrichtung zur Herstellung von Kunststoffrohren gemäß dem Oberbegriff des Hauptanspruches sowie auf ein Verfahren gemäß Anspruch 6.

In Kunststoffrohre produzierenden Einrichtungen besteht das Problem, daß Rohre unterschiedlicher Außendurchmesser mit gleichzeitig unterschiedlichen Wanddicken hergestellt werden müssen. Im Stand der Technik ist es dabei erforderlich, daß entsprechend dem Außendurchmesser des Rohres und der gewünschten, üblicherweise in Abhängigkeit des Außendurchmessers genormten Wanddicke des Rohres entsprechende Werkzeuge ausgewechselt werden müssen. Dies bedingt ein Stillsetzen der Maschine, einen hohen Arbeitsaufwand für das Auswechseln der Werkzeuge und Verlust an Kunststoffmaterial, bis das neue Rohr wieder gezogen werden kann. Ein entsprechendes Ziehen des Rohres, um bei einem bestehenden Außendurchmesser ein Rohr geringerer Wandstärke herstellen zu können, verbietet sich deshalb, da die Molekülkette des Kunststoffes gereckt und damit orientiert wird, so daß dadurch die Festigkeit des Rohres negativ beeinflußt wird, die Schrumpfund die Faltenbildung aber gefördert werden.

In der AT 401 031 B wird eine Einrichtung zum Regeln der Wandstärke eines aus thermoplastischen Kunststoffmassen durch Extrusion hergestellten Rohres beschrieben. Bei dieser Anordnung wird das extrudierte Rohr in einer Kalibrierform an deren gekühlte Innenwände durch einen im Bereich der Innenwände erzeugten Unterdruck angelegt. Hierbei ist die Innenwand der Kalibrierform in einander in Umfangsrichtung benachbarte Abschnitte bzw. Sektoren unterteilt, die voneinander thermisch entkoppelt sind, wobei den einzelnen Sektoren oder Abschnitten unabhängig voneinander regelbare Temperiereinrichtungen zugeordnet sind. Sollen Rohre unterschiedlichen Außendurchmessers hergestellt werden, müssen die Inneneinrichtungen der Kalibrierkammer, an der die Rohraußenwand durch Unterdruck angelegt wird, vollkommen ausgewechselt und durch andere, einen anderen Durchmesser aufweisenden Einrichtungen ersetzt werden.

Auch in der DE 19 23 490 A1 wird eine Kalibrierkammer erläutert, in der voneinander unabhängige Blenden angeordnet sind, die gekühlt sind, wobei in der Kalibrierkammer ein Unterdruck erzeugt wird, durch die die Rohraußenwand an die Blenden angelegt wird. Auch hier ist dann, wenn unterschiedliche Rohraußendurchmesser gefordert werden, eine Umrüstung der Kalibrierkammer durch Einsatz anderer Blenden erforderlich. Die Blenden sind in ihrer Blendenöffnungsweite nicht einstellbar, sondern nur in ihrem Abstand voneinander regelbar.

Aus der GB- A- 21 82 603 ist es bekannt, eine vakuumdichte Kammer mit einem Vakuumanschluß als Vakuumsaugglocke zu verwenden. Durch das Aufweiten des aus einem Ziehwerkzeug austretenden Materialstranges quer zur Rohrlängsachse soll eine bessere Faserverstärkung des Produktes in Umfangsrichtung erzielt werden.

Demgegenüber liegt der Erfindung die Aufgabe zugrunde, eine Vorrichtung zu schaffen und ein Verfahren anzugeben, um während der Produktionsphase des Rohres ohne Unterbrechung des Produktionsganges eine vollautomatisch gesteuerte Umstellung zwischen mehreren Kunststoffrohrdimensionen im kontinuierlichen Extrusionsprozeß zu erreichen, wobei der Außendurchmesser und die Rohrwanddicke entsprechend den Kundenwünschen bzw. der Normung aufeinander abgestimmt sind.

Diese der Erfindung zugrundeliegende Aufgabe wird durch die Lehre der Ansprüche 1 und 6 gelöst.

Vorteilhafte Ausgestaltungen sind in den Unteransprüchen erläutert.

Mit anderen Worten ausgedrückt wird vorgeschlagen, daß in Produktionsrichtung gesehen sich an den Rohrkopf eine Vakuum-Saugglocke anschließt, die durch eine vakuumdichte Kammer gebildet ist, an die ein Vakuumanschluß anschließt, wobei innerhalb der Kammer Meßwerkzeuge den Außendurchmesser des vorläufigen Schmelzestranges kontrollieren und das Vakuum entsprechend steuern. Hierdurch wird also der Schmelzestrang z. B. auf einen größeren Außendurchmesser aufgesaugt, um dann in die der weiteren Bearbeitung des Schmelzestranges dienenden Vorrrichtungen eingeführt zu werden.

Anschließend gelangt der Massestrang in eine Kalibrierstation, in dem unterschiedliche Rohrdimensionen einstellbar sind. Zwar ist es aus der WO 96/36457 bekannt, geringfügige Kalibriereinstellungen in einer Kalibrierstation dadurch vorzunehmen, daß durch eine Keilwirkung einzelne offene Kalibrierringe geringfügig in ihrem Durchmesser verändert werden können. Mit einer solchen Anordnung ist aber eine Variation von Rohraußendimensionen nicht erreichbar, sondern es wird lediglich dem Schrumpfverhalten entgegengewirkt. Anschließend an die Kalibrierstation gelangt dann das noch nicht komplett ausgehärtete Kunststoffrohr in ein Vakuum-Kalibrierbad, dessen Stützrollen auf den gewünschten Rohraußendurchmesser einstellbar sind. In diesem Vakuum-Kalibrierbad wird durch Wasserzugabe das Rohr gekühlt und damit verfestigt und verläßt dieses Vakuumkalibrierbad durch eine Vakuumabdichtung, die wiederum sich selbstständig auf den Rohrdurchmesser einstellend ausgebildet ist, z. B. durch Federanordnung oder hydraulische Verstellungen, wobei auch hier eine Wasserzugabe zur Schmierung und Abdichtung durchgeführt werden kann.

Die ganze Produktionslinie kann durch Einstellen beispielsweise gesteuert über die Größe des in der Vakuum-Saugglocke aufgeweiteten Rohres automatisch gesteuert werden, d.h. also, durch die Vorgabe einer Einstellung, beispielsweise innerhalb der Vakuum-Saugglocke, stellen sich alle anderen, an den Außendurchmesser des Rohres angepaßten Kalibrierstütz- und - abdichteinrichtungen ein.

Mit der erfindungsgemäßen Produktionslinie kann aber auch bei normalen Rohrproduktionen der Istwert des abgekühlten Rohres kontrolliert und bei Abweichungen nachgeregelt werden.

Ein Ausführungsbeispiel der Erfindung wird nachfolgend anhand der Zeichnung erläutert. Die Zeichnung zeigt dabei in
- Fig. 1: eine Gesamtansicht einer Produktionseinrichtung und in
- Fig. 2: in größerem Maßstab die eigentliche Saugglocke.

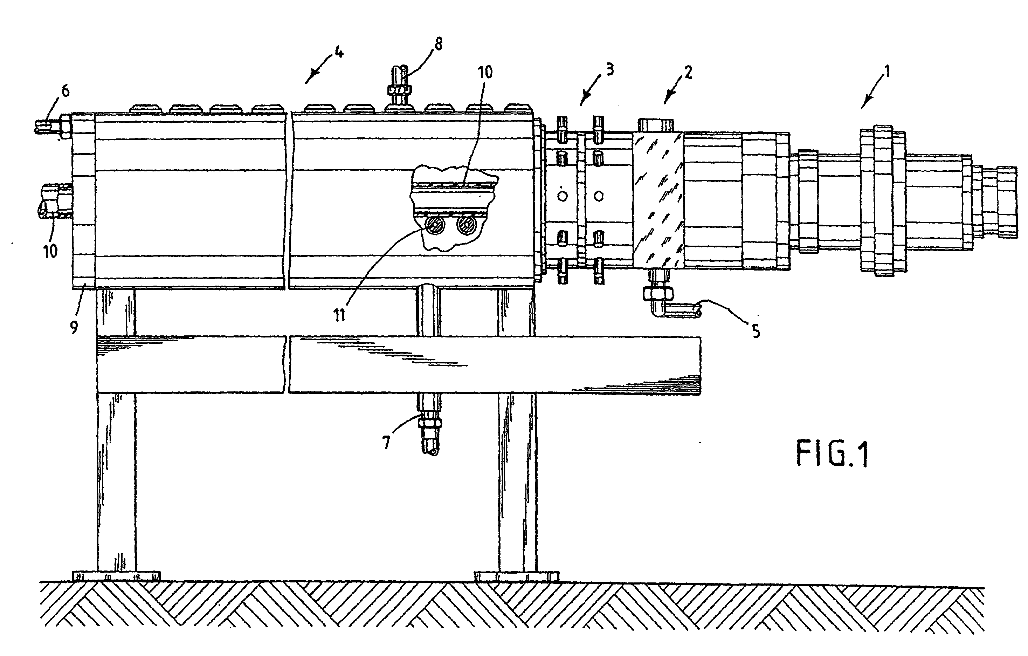

In Fig. 1 ist ein verstellbarer Rohrkopf erkennbar, der in Produktionsrichtung gesehen an einen in der Zeichnung nicht dargestellten Extruder anschließt. An den verstellbaren Rohrkopf 1 schließt sich eine Vakuum-Saugglocke 2 an, die mit einem Vakuumanschluß 5 ausgerüstet ist, in der Meßvorrichtungen vorgesehen sind, die in Abhängigkeit des gewünschten Rohraußendurchmessers, das in der Saugglocke herrschende Vakuum einstellen, so daß dadurch der rohrförmige Schmelzestrom auf den gewünschten Außendurchmesser eingestellt wird, d. h. aufgesaugt wird, wobei in der Vakuum-Saugglocke 2 bereits eine Vorkühlung des Schmelzestranges erfolgen kann. In der Vakuum-Saugglocke 2 kann in Verbindung mit dem verstellbaren Rohrkopf eine genaue Rohrwanddicke eingestellt werden, wobei die Rohrwanddicke in Abhängigkeit des Außendurchmessers des Rohres variiert werden kann.

An die Vakuum-Saugglocke 2 schließt sich eine Kalibrierstation 3 an. Hier erfolgt durch eine mechanische Zentralverstellung das genaue Kalibrieren des Außendurchmessers des Schmelzestranges und des schon teilweise ausgehärteten Rohres, wobei diese Kalibrierstation für alle in Frage kommenden Kunststoffe einsetzbar ist. In dieser Kalibrierstation können mehrere Dimensionen auch mit den unterschiedlichen Wanddicken eingestellt werden.

In einem sich in Produktionsrichtung gesehen daran anschließenden Vakuum-Kalibrierbad 4 erfolgt dann das Auskühlen und Aushärten des Kunststoffrohres durch Sprühwasser, wobei in der Zeichnung ein Wasserzulauf 6 und ein Wasserabfluß 7 erkennbar ist. Weiterhin schließt an das Vakuum-Kalibrierbad 4 ein Vakuumanschluß 8 an und das sich in dem Vakuum-Kalibrierbad 4 befindende Rohr 10 läuft über Stützrollen 11, die auch als Kalibrierrollen bezeichnet werden können und sich auf den gewünschten Rohrdurchmesser einstellen lassen. Die Oberfläche des Rohres 10 ist relativ hart und das Rohr 10 verläßt das Vakuum-Kalibrierbad 4 durch eine Vakuumabdichtung 9, die sich entweder selbständig auf den Rohrdurchmesser einstellt oder in Abhängigkeit der eingestellten Rohrdimensionen in der Kalibrierstation 3 und/oder im Vakuum-Kalibrierbad 4 eingestellt wird. In der Vakuumabdichtung 9 können Formrollen angeordnet sein, die hydraulisch oder durch mechanische Federn betätigt werden, wobei gleichzeitig hier in den Durchlauf des Rohres Wasser zur Schmierung und Abdichtung eingeführt werden kann.

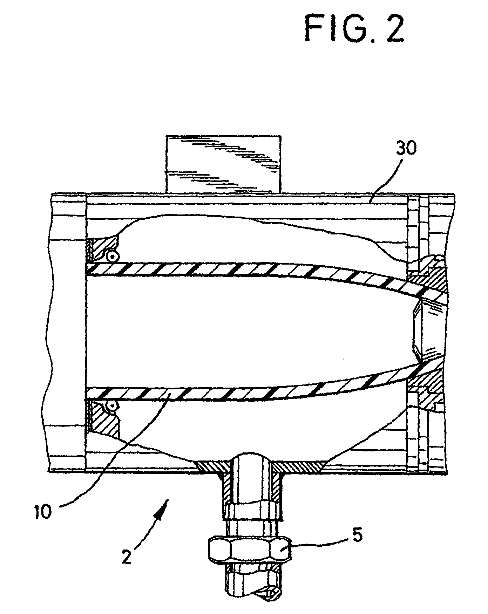

Die in Fig. 2 dargestellte Saugglocke 2 besteht im wesentlichen aus einer vakuumdichten Kammer 30, in der sich der rohrförmige Schmelzestrang 10 führt. Diese Kammer ist mit einem Vakuumanschluß 5 ausgerüstet und innerhalb der Kammer sind in der Zeichnung nicht dargestellte Meßwerkzeuge vorgesehen, die den Außendurchmesser des Schmelzestranges kontrollieren und in Abhängigkeit der gewünschten Aufweitung des Schmelzestranges nunmehr das Vakuum steuern, so daß dieses größer oder weniger groß ist. Es erfolgt also eine Regelung des Vakuums in Abhängigkeit der gewünschten Rohrgeometrie, d. h. des gewünschten Rohraußendurchmessers.

## Patentansprüche

1. Vorrichtung mit einem Extruder und einem Rohrkopf (1) zur Herstellung von Kunststoffrohren mit einer sich an den Rohrkopf (1) in Produktionsrichtung gesehen anschließenden, durch eine vakuumdichte Kammer (30) mit einem Vakuumanschluß (5) gebildete Vakuum-Saugglocke (2), **gekennzeichnet durch** Meßwerkzeuge innerhalb der Kammer (30), die den Außendurchmesser des rohrförmigen Schmelzestranges erfassen und **durch** Verändern des Vakuums den Schmelzestrang in seinem Außendurchmesser geregelt verändern.

2. Vorrichtung nach Anspruch 1, **dadurch gekennzeichnet, daß** die Meßwerkzeuge mit an der Rohraußenwand anliegenden Tastwerkzeugen arbeiten.

3. Vorrichtung nach Anspruch 1 oder 2, **dadurch gekennzeichnet, daß** die Meßwerkzeuge berührungslos den Außendurchmesser des Rohres (10) kontrollieren.

4. Vorrichtung nach Anspruch 3, **dadurch gekennzeichnet, daß** die Meßwerkzeuge mittels Schall- oder Lichtsensoren den Außendurchmesser des Rohres (10) kontrollieren.

5. Vorrichtung nach Anspruch 1, **dadurch gekennzeichnet, daß** während der Produktionsphase der Massespalt des Rohrkopfes (1) verstellbar ist und eine sich an die Vakuum-Saugglocke (2) anschließende Kalibrierstation für den Außendurchmesser des Rohres vorgesehen ist, in der während der Produktionsphase unterschiedliche Rohrdimensionen einstellbar sind und ein sich an die Kalibrierstation (3) anschließendes Vakuum-Kalibrierbad (4) angeordnet ist, in dem das Rohr (10) abgekühlt und ausgehärtet wird und das Vakuum-Kalibrierbad (4) durch eine sich selbsttätig auf den Rohrdurchmesser einstellende Vakuumabdichtung (9) verläßt.

6. Verfahren zur Herstellung von Kunststoffrohren mit einem Extruder, einem sich in Produktionsrichtung an den Extruder anschließenden Rohrkopf und einer Kalibrierstation, in der Kalibrierwerkzeuge an die Außenwandung des Rohres anlegbar sind, wobei der Massespalt des Rohrkopfes während der Produktionsphase verstellt wird, wobei in einer Kalibrierstation während der Produktionsphase unterschiedliche Rohrdurchmesser eingestellt werden und in einem sich an die Kalibrierstation anschließenden Vakuum-Kalibrierbad das Rohr abgekühlt und ausgehärtet wird.

## Claims

1. Device with an extruder and a pipe head (1) for producing plastics pipes having a vacuum forming chamber (2), comprising a vacuum-tight chamber (30) with a vacuum connector (5), following the pipe head (1) seen in the production direction, **characterised in that** it has measuring tools within the chamber (30) which detect the outer diameter of the pipe-shaped melt column and by varying the vacuum change the outer diameter of the melt column in a controlled manner.

2. Device according to Claim 1, **characterised in that** the measuring tools operate with feeler tools contacting the pipe outer wall.

3. Device according to Claim 1 or 2, **characterised in that** the measuring tools monitor the outer diameter of the pipe (10) without contact.

4. Device according to Claim 3, **characterised in that** the measuring tools monitor the outer diameter of the pipe (10) by means of sound or light sensors.

5. Device according to Claim 1, **characterised in that** during the production phase the extrusion gap of the pipe head (1) is adjustable and a calibration station for the outer diameter of the pipe is provided following the vacuum forming chamber (2), in which station during the production phase different pipe dimensions may be set, and a vacuum calibration bath (4) is arranged following the calibration station (3) in which calibration bath the pipe (10) is cooled and hardened and leaves the vacuum calibration bath (4) through a vacuum seal (9) which automatically adjusts itself to the pipe diameter.

6. Method for producing plastics pipes having an extruder, a pipe head following the extruder seen in the production direction and a calibration station in which calibration tools may be placed against the outer wall of the pipe, whereby the extrusion gap of the pipe head is adjusted during the production phase, whereby in a calibration station different pipe diameters are set during the production phase and in a vacuum calibration bath following the calibration station the pipe is cooled and hardened.

## Revendications

1. Dispositif comprenant une extrudeuse et une tête tubulaire (1) pour la fabrication de tuyaux en plastique, avec une cloche d'aspiration à vide (2) se raccordant à la tête tubulaire (1) dans le sens de production et formée par une chambre étanche au vide (30) dotée d'un raccord de vide (5), **caractérisé en ce qu'**il comporte des outils de mesure situés à l'intérieur de la chambre (30), qui détectent le diamètre extérieur de la pièce tubulaire de matière fondue extrudée et modifient de façon régulée, par une modification du vide, le diamètre extérieur de la pièce de matière fondue extrudée.

2. Dispositif selon la revendication 1, **caractérisé en ce que** les outils de mesure fonctionnent avec des outils de détection contigus de la paroi extérieure du tuyau.

3. Dispositif selon la revendication 1 ou 2, **caractérisé en ce que** les outils de mesure contrôlent le diamètre extérieur du tuyau (10) sans contact.

4. Dispositif selon la revendication 3, **caractérisé en ce que** les outils de mesure contrôlent le diamètre extérieur du tuyau (10) au moyen de capteurs à ultrasons ou lumineux.

5. Dispositif selon la revendication 1, **caractérisé en ce que**, pendant la phase de production, l'interstice de passage de la pâte dans la tête tubulaire (1) est réglable et il est prévu un poste de calibrage du diamètre extérieur du tuyau faisant suite à la cloche d'aspiration sous vide (2), dans lequel différentes dimensions de tuyaux peuvent être définies pendant la phase de production, et le poste de calibrage (3) est suivi d'un bain de calibrage sous vide (4), dans lequel le tuyau (10) est refroidi et durci avant de quitter le bain de calibrage sous vide (4) en traversant un joint d'étanchéité au vide (9) qui s'ajuste automatiquement au diamètre du tuyau.

6. Procédé de fabrication de tuyaux en plastique avec une extrudeuse, une tête tubulaire faisant suite à l'extrudeuse dans le sens de la production et un poste de calibrage dans lequel des outils de calibrage peuvent être appliqués sur la paroi extérieure du tuyau, dans lequel l'interstice de passage de la pâte de la tête tubulaire est modifié pendant la phase de production, différents diamètres de tuyau sont définis pendant la phase de production dans un poste de calibrage, et le tuyau est refroidi et durci dans un bain de calibrage sous vide qui fait suite au poste de calibrage.
